# EUROPEAN PATENT APPLICATION

(11) **EP 4 776 318 A1**
(43) Date of publication of application: **15.07.2026**
(21) Application number: 25223211.1
(22) Date of filing: 15.12.2025
(51) Int. Cl.: H01H 25/04

(54) **CONTROLLER AND KEY ASSEMBLY**

(30) Priority: 08.01.2025 JP 2025002917
(71) Applicant: Nintendo Co., Ltd., Kyoto 601-8501 (JP)
(72) Inventor: OKAMURA, Takanori, Kyoto 601-8501 (JP); MINAGAWA, Shinta, Kyoto 601-8501 (JP); JINGUJI, Gagaku, Kyoto 601-8501 (JP)
(74) Representative: Bardehle Pagenberg Partnerschaft mbB Patentanwälte Rechtsanwälte

(57) **Abstract**

A controller is provided to improve keytop operability. The controller includes a first wall, a second wall facing the first wall, a keytop pivotally located in a space between the first wall and the second wall, and an elastic member disposed between the keytop and the first wall. The keytop includes a shaft extending toward the first wall, and an extension at an end of the shaft. The extension has a maximum width greater than a maximum width of the shaft when viewed in a thickness direction of the first wall. The first wall or the second wall includes a restricting portion having an opening with a minimum width greater than the maximum width of the shaft and less than the maximum width of the extension. The restricting portion receives the shaft in the opening and positions the extension between the opening and the first wall to regulate pivoting of the keytop.

## Description

### TECHNICAL FIELD

The present invention relates to a controller and a key assembly.

### BACKGROUND ART

A known controller is described in, for example, Patent Literature 1 (JP-A-2000-339082). Patent Document 1 describes a controller including a cross-shaped switch (also referred to as a keytop).

### CITATION LIST

### PATENT LITERATURE

Patent Literature 1: JP-A-2000-339082

### SUMMARY OF THE INVENTION

### PROBLEMS TO BE SOLVED BY THE INVENTION

In the controller described in Patent Literature 1, the cross-shaped switch is located on a substrate with a rubber member disposed between the switch and the substrate. The cross-shaped switch includes a central boss spaced from the substrate. When one of four finger-pressing portions of the cross-shaped switch is pressed with the central boss spaced from the substrate (in the air), the pivot point of the cross-shaped switch is shifted toward a finger-pressing portion opposite to the pressed finger-pressing portion. This can increase the pressing force (stroke) applied to the pressed finger-pressing portion and thus cause unintended pressing (half-pressing) on the finger-pressing portions adjacent to the pressed finger-pressing portion. For example, pressing the right key in the cross-shaped switch shifts the pivot point toward the left key, causing half-pressing on the up and down keys.

For known controllers, the operability of the keytop is to be improved.

In response to the above issue, one or more aspects of present invention are directed to a controller and a key assembly having the keytop with improved operability.

### SOLUTIONS TO THE PROBLEMS

In response to the above, one or more aspects of the present invention may have, for example, the structures according to (1) to (7) below.
(1) A controller according to an aspect of the present invention includes a first wall including a plurality of contacts, a second wall facing the first wall, a keytop pivotally located in a space between the first wall and the second wall and at least partially protruding and exposed through the second wall, and an elastic member disposed between the keytop and the first wall. The elastic member includes conductors at positions facing the plurality of respective contacts. In response to pivoting of the keytop, the elastic member is pressed by the keytop to electrically connect one of the plurality of contacts to a corresponding conductor of the conductors. The keytop includes a shaft extending toward the first wall, and an extension at an end of the shaft. The extension has a maximum width greater than a maximum width of the shaft when viewed in a thickness direction of the first wall. The first wall or the second wall includes a restricting portion having an opening with a minimum width greater than the maximum width of the shaft and less than the maximum width of the extension. The restricting portion receives the shaft in the opening and positions the extension between the opening and the first wall to regulate pivoting of the keytop.
   With the structure according to (1), the restricting portion can position the pivot point of the keytop adjacent to the extension. This improves the operability of the keytop.
(2) In the structure according to (1), the extension may have a convex spherical surface. The restricting portion may have a concave spherical surface on which the convex spherical surface of the extension slides in response to pivoting of the keytop.
   The structure according to (2) can position the pivot point of the keytop at the center of the convex spherical surface of the extension. This further improves the operability of the keytop.
(3) In the structure according to (1) or (2), the first wall may include a support protruding toward the extension and supporting the extension.
   With the structure according to (3), the extension supported by the support can remain at the same position in the thickness direction of the first wall when the elastic member deforms due to aging deterioration. This reduces shifting of the pivot point of the keytop, thus further improving the operability of the keytop.
(4) In the structure according to (3), the extension may have a convex spherical surface. The support may have a concave spherical surface on which the convex spherical surface of the extension slides in response to pivoting of the keytop.
   The structure according to (4) can easily position the pivot point of the keytop at the center of the convex spherical surface of the extension. This further improves the operability of the keytop.
(5) In the structure according to any one of (1) to (4), the shaft and the extension may be formed from different materials.
   The structure according to (5) allows each of the shaft and the extension to be formed from an appropriate material. For example, the extension may be formed from a material with high wear resistance and high sliding performance. The shaft may be formed from a material with high rigidity.
(6) In the structure according to any one of (1) to (5), the extension may be spherical.
   The structure according to (6) can easily position the pivot point of the keytop at the center of the spherical surface of the extension. This further improves the operability of the keytop.
(7) A key assembly according to an aspect of the present invention includes a base including a plurality of contacts, a keytop pivotally located above the base, and an elastic member disposed between the keytop and the base. The elastic member includes conductors at positions facing the plurality of respective contacts. In response to pivoting of the keytop, the elastic member is pressed by the keytop to electrically connect one of the plurality of contacts to a corresponding conductor of the conductors. The keytop includes a shaft extending toward the base, and an extension at an end of the shaft. The extension has a maximum width greater than a maximum width of the shaft when viewed in a thickness direction of the base. The key assembly includes a restricting portion above the base. The restricting portion has an opening having a minimum width greater than the maximum width of the shaft and less than the maximum width of the extension. The restricting portion receives the shaft in the opening and positions the extension between the opening and the base to regulate pivoting of the keytop.

With the structure according to (7), the restricting portion can position the pivot point of the keytop adjacent to the extension. This improves the operability of the keytop.

### EFFECTS OF THE INVENTION

The controller and the key assembly according to the above aspects of the present invention improve the operability of the keytop.

### BRIEF DESCRIPTION OF DRAWINGS

Fig. 1 is a perspective view of a controller according to an embodiment of the present invention.
Fig. 2 is a partially enlarged cross-sectional view of the controller in Fig. 1.
Fig. 3 is an exploded perspective view of a keytop and its surrounding portions included in the controller in Fig. 1.
Fig. 4 is a partially enlarged cross-sectional view of the controller in Fig. 1 with the keytop pivoting.
Fig. 5 is a schematic, partially enlarged cross-sectional view of a controller according to a first modification of the embodiment of the present invention.
Fig. 6 is a cross-sectional view of the controller in Fig. 5, with the keytop pivoting.
Fig. 7 is a schematic, partially enlarged cross-sectional view of a controller according to a second modification of the embodiment of the present invention.
Fig. 8 is a cross-sectional view of the controller in Fig. 7, with a keytop pivoting.
Fig. 9 is a plan view of a keytop in a controller according to a third modification of the embodiment of the present invention.
Fig. 10 is a partially enlarged cross-sectional view of the controller according to the third modification of the embodiment of the present invention, taken along a diagonal line.
Fig. 11 is a partially enlarged cross-sectional view of the controller according to the third modification of the embodiment of the present invention, taken along a lateral line.

### DETAILED DESCRIPTION

One or more embodiments of the present invention will now be described with reference to the accompanying drawings. The embodiments described below are mere examples and do not limit the scope of the present invention and its applications or uses. The drawings are schematic and are not drawn to scale relative to the actual size of each component. Like reference numerals denote like functional components in the drawings, and such components will not be described.

For ease of explanation, directional terms such as up and down are used herein to describe the components in typical use. However, these terms are not intended to limit the use or other situations of a controller according to one or more embodiments of the present invention.

### (Embodiments)

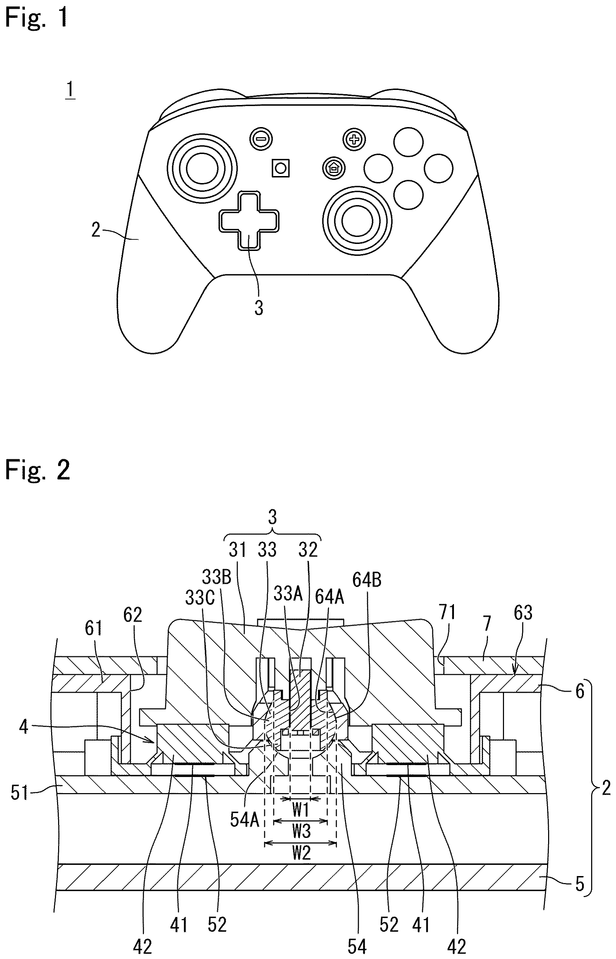

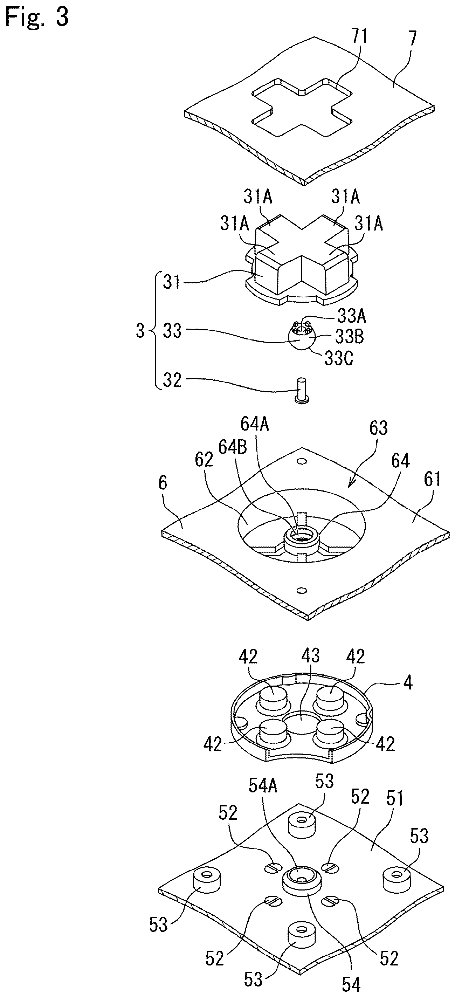

The structure of a controller including a key assembly according to one or more embodiments of the present invention will now be described. Fig. 1 is a perspective view of the controller according to an embodiment of the present invention. Fig. 2 is a partially enlarged cross-sectional view of the controller in Fig. 1. Fig. 3 is an exploded perspective view of a keytop and its surrounding portions in the controller in Fig. 1.

As shown in Figs. 1 to 3, a controller 1 according to the present embodiment includes a housing 2 and a keytop 3.

As shown in Fig. 2, the housing 2 includes a lower housing 5 and an upper housing 6.

A lower wall 51, which is an example of a first wall or a base, is located between the lower housing 5 and the upper housing 6. The lower wall 51 includes multiple contacts 52. In the present embodiment, the lower wall 51 includes four contacts 52.

The upper housing 6 includes an upper wall 61, which is an example of a second wall. The upper wall 61 faces the lower wall 51. As shown in Fig. 3, the lower wall 51 includes multiple bosses 53 protruding toward the upper wall 61. In the present embodiment, the lower wall 51 includes four cylindrical bosses 53 protruding toward the upper wall 61. The housing 2 is assembled with fasteners (not shown) such as screws screwed into the upper wall 61 from below the lower wall 51 through the four bosses 53.

The upper wall 61 in the upper housing 6 has a circular through-hole 62. The upper wall 61 in the upper housing 6 has a recess 63 on its upper surface to receive a top plate 7. The top plate 7 received in the recess 63 is fixed to the upper wall 61 with, for example, an adhesive. The top plate 7 has a cross-shaped opening 71 to allow the keytop 3 to partially protrude and be exposed.

The keytop 3 is pivotally located in a space between the lower wall 51 and the upper wall 61 to at least partially protrude and be exposed through the upper wall 61. The keytop 3 is pivotally located above the lower wall 51. In the present embodiment, the keytop 3 is a cross-shaped switch. The keytop 3 is received in the through-hole 62 in the upper wall 61 to protrude and be exposed through the opening 71 in the top plate 7.

The keytop 3 includes a keytop body 31, a shaft 32, and an extension 33. The keytop body 31 is cross-shaped. The keytop body 31 includes a portion protruding and exposed through the opening 71 in the top plate 7. The keytop body 31 is formed from, for example, a resin.

The shaft 32 extends toward the lower wall 51. In the present embodiment, the shaft 32 is a threaded shaft. The keytop body 31 and the upper end (basal end) of the shaft 32 are integrated together with the tip end of the threaded shaft screwed into the keytop body 31.

The extension 33 is located at the lower end of the shaft 32. As shown in Fig. 2, the extension 33 has a maximum width W2 greater than a maximum width W1 of the shaft 32 when viewed in the thickness direction (vertical direction) of the lower wall 51. In the present embodiment, the extension 33 is spherical and has a through-hole 33A extending vertically through its center. The extension 33 and the shaft 32 are integrated together with the threaded shaft screwed into the through-hole 33A in the extension 33.

The shaft 32 and the extension 33 are formed from different materials. In the present embodiment, the shaft 32 is formed from a material with high rigidity. The extension 33 is formed from a material with higher wear resistance and higher sliding performance than the material of the shaft 32.

The upper housing 6 includes a restricting portion 64 that regulates the pivoting of the keytop 3. The restricting portion 64 is located in the through-hole 62. The restricting portion 64 has an opening 64A with a minimum width W3 greater than the maximum width W1 of the shaft 32 and less than the maximum width W2 of the extension 33. The restricting portion 64 has a width decreasing toward the top surface of the keytop 3 in the thickness direction. The restricting portion 64 receives the shaft 32 in the opening 64A to position the extension 33 between the opening 64A and the lower wall 51, thus regulating the pivoting of the keytop 3. The restricting portion 64 also prevents the keytop 3 from slipping out of the housing 2.

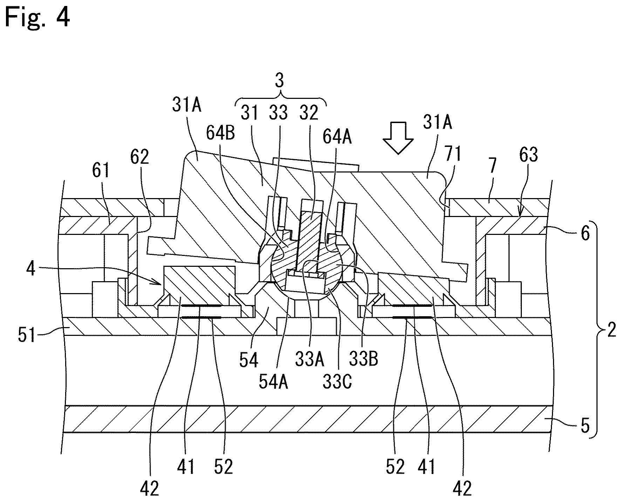

The extension 33 has a convex spherical surface 33B in its portion connected to the shaft 32. The convex spherical surface expands outward. The restricting portion 64 has a concave spherical surface 64B on which the convex spherical surface 33B of the extension 33 slides in response to pivoting of the keytop 3. This structure can position the pivot point of the keytop 3 at the center of the spherical surface of the extension 33 in response to pivoting of the keytop 3 as shown in Fig. 4.

The extension 33 is supported from below by the support 54 located on the lower wall 51. The support 54 protrudes toward the extension 33 to support the extension 33 from below. The extension 33 has a convex spherical surface 33C in its portion supported by the support 54. The support 54 has a concave spherical surface 54A on which the convex spherical surface 33C of the extension 33 slides in response to pivoting of the keytop 3. The concave spherical surface is recessed inward. This structure can easily position the pivot point of the keytop 3 at the center of the spherical surface of the extension 33 in response to pivoting of the keytop 3 as shown in Fig. 4.

In the present embodiment, the bottom surface of the keytop body 31 in a stationary state is in contact with an elastic member 4. The keytop 3 is thus urged upward under an elastic force from the elastic member 4, with the convex spherical surface 33C of the extension 33 in contact with the concave spherical surface 64B of the restricting portion 64.

The elastic member 4 is located between the keytop 3 and the lower wall 51. The elastic member 4 includes conductors 41 facing the respective contacts 52 on the lower wall 51. In the present embodiment, four conductors 41 are arranged to correspond to the four contacts 52. In response to pivoting of the keytop 3, the elastic member 4 is pressed by the keytop 3 to electrically connect one of the four contacts 52 to the corresponding conductor 41, as shown in Fig. 4.

In the present embodiment, the elastic member 4 includes four cylindrical pressure receivers 42. The pressure receivers 42 are located to come in contact with finger-pressing portions 31A of the cross-shaped keytop body 31 from below. Each pressure receiver 42 has one of the conductors 41 on its bottom surface. When one of the finger-pressing portions 31A of the keytop body 31 is pressed downward, the corresponding pressure receiver 42 pressed by the finger pression portion 31A moves downward to place the conductor 41 in the corresponding pressure receiver 42 into contact with the corresponding contact 52 and allows the conductor 41 and the contact 52 to electrically connect with each other.

The elastic member 4 has a through-hole 43 in its central area surrounded by the four pressure receivers 42. The support 54 in the lower housing 5 is in contact with the extension 33 through the through-hole 43.

The controller 1 according to the present embodiment includes the restricting portion 64 having the opening 64A with the minimum width W3 greater than the maximum width W1 of the shaft 32 of the keytop 3 and less than the maximum width W2 of the extension 33. The restricting portion 64 receives the shaft 32 in the opening 64A to position the extension 33 between the opening 64A and the lower wall 51, thus regulating the pivoting of the keytop 3. In this structure, the restricting portion 64 can position the pivot point of the keytop 3 adjacent to the extension 33. This improves the operability of the keytop 3.

In the controller 1 according to the present embodiment, the extension 33 has the convex spherical surface 33B, and the restricting portion 64 has the concave spherical surface 64B on which the convex spherical surface 33B of the extension 33 slides in response to pivoting of the keytop 3. This structure can position the pivot point of the keytop 3 at the center of the convex spherical surface 33B of the extension 33. This further improves the operability of the keytop 3.

In the controller 1 according to the present embodiment, the lower wall 51 includes the support 54 protruding toward the extension 33 to support the extension 33. In this structure, the extension 33 supported by the support 54 can remain at the same position in the thickness direction of the lower wall 51 when the elastic member 4 deforms due to aging deterioration. This reduces the shifting of the pivot point of the keytop 3, thus further improving the operability of the keytop 3.

In the controller 1 according to the present embodiment, the extension 33 has the convex spherical surface 33C, and the support 54 has the concave spherical surface 54A on which the convex spherical surface 33C of the extension 33 slides in response to pivoting of the keytop 3. This structure can easily position the pivot point of the keytop 3 at the center of the convex spherical surface 33C of the extension 33. This further improves the operability of the keytop 3.

In the controller 1 according to the present embodiment, the shaft 32 and the extension 33 are formed from different materials. In this structure, each of the shaft 32 and the extension 33 can be formed from an appropriate material. For example, the extension 33 may be formed from a material with a lower coefficient of friction than the material of the shaft 32.

In the controller 1 according to the present embodiment, the extension 33 is spherical. This structure can easily position the pivot point of the keytop 3 at the center of the spherical surface of the extension 33. This further improves the operability of the keytop 3.

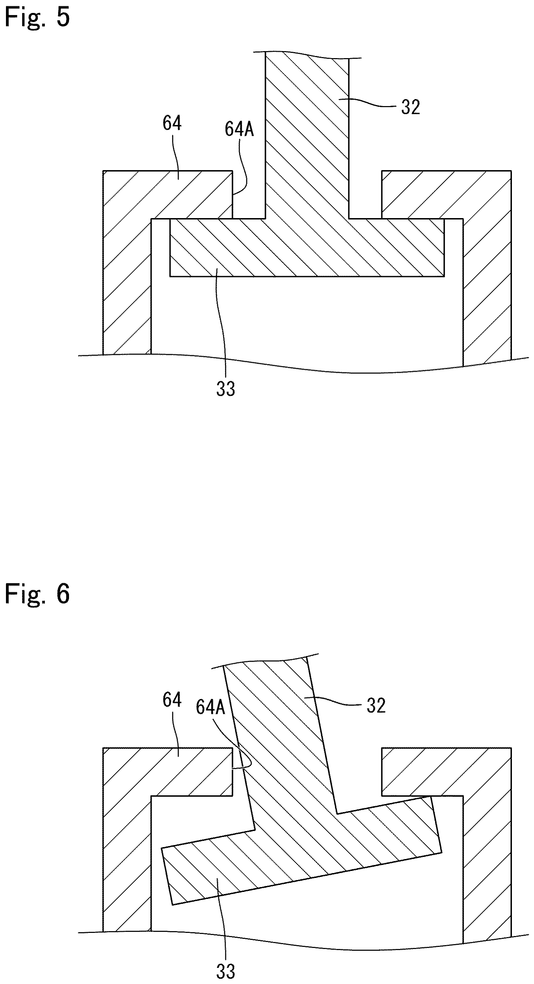

The present invention is not limited to this embodiment and may be modified in various manners. In the above embodiment, for example, the extension 33 is spherical. However, the present invention is not limited to this embodiment. The extension 33 is any extension that has the maximum width W2 greater than the maximum width W1 of the shaft 32 when viewed in the thickness direction of the lower wall 51. As in a first modification shown in Figs. 5 and 6, for example, the extension 33 may have a rectangular cross section (for example, the extension 33 may be a disk). The restricting portion 64 is any restricting portion that has the opening 64A with the minimum width W3 greater than the maximum width W1 of the shaft 32 and less than the maximum width W2 of the extension 33. The restricting portion 64 with this structure can also position the pivot point of the keytop 3 adjacent to the extension 33. This improves the operability of the keytop 3.

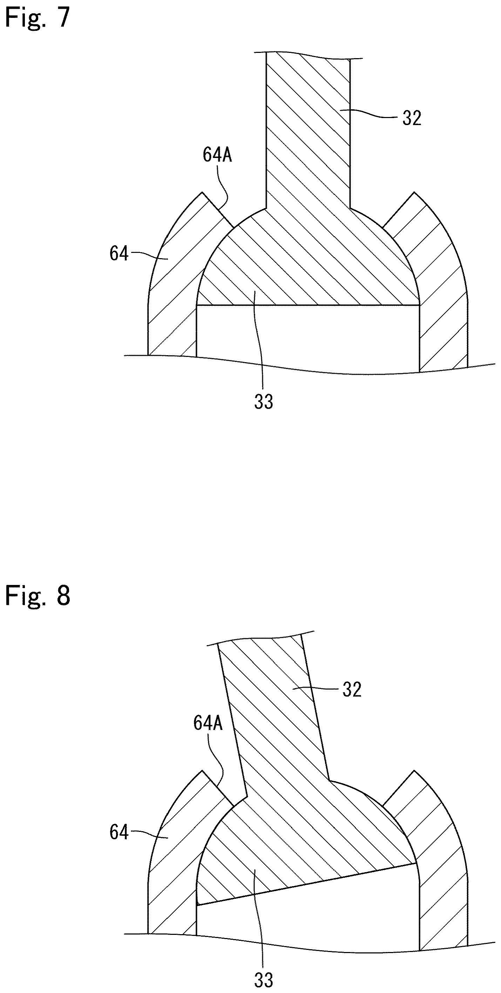

As in a second modification shown in Figs. 7 and 8, for example, the extension 33 may be hemispherical. In this structure as well, the restricting portion 64 can position the pivot point of the keytop 3 adjacent to the extension 33. This improves the operability of the keytop 3.

In the above embodiment, the restricting portion 64 is located in a portion of the upper housing 6, which is an example of the second wall. However, the present invention is not limited to this embodiment. For example, the restricting portion 64 may be located on the lower housing 5, which is an example of the first wall. The restricting portion 64 may include one or more components separate from the first wall or the second wall.

In the above embodiment, the support 54 has the concave spherical surface 54A on which the convex spherical surface 33C of the extension 33 slides in response to pivoting of the keytop 3. However, the present invention is not limited to this embodiment. The support 54 is any support that can support the extension 33. The support 54 may be, for example, a flat surface.

In the above embodiment, the extension 33 and the shaft 32 are integrated together with the threaded shaft screwed into the through-hole 33A in the extension 33. However, the present invention is not limited to this embodiment. For example, the shaft 32 and the extension 33 may be integrated together with an adhesive.

In the above embodiment, the shaft 32 and the extension 33 are formed from different materials. However, the present invention is not limited to this embodiment. For example, the shaft 32 and the extension 33 may be a single component formed from the same material.

In the above embodiment, the upper housing 6 and the top plate 7 are separate components. However, the present invention is not limited to this embodiment. The upper housing 6 and the top plate 7 may be a single component formed from the same material.

In the above embodiment, the lower wall 51 between the lower housing 5 and the upper housing 6 is an example of the first wall or the base. However, the present invention is not limited to this embodiment. The first wall or the base may be, for example, a wall included in the lower housing 5.

The elastic member 4 may or may not be entirely elastic. The elastic member 4 is any member that urges the keytop 3 upward to place the convex spherical surface 33C of the extension 33 into contact with the concave spherical surface 64B of the restricting portion 64. For example, the elastic member 4 may be elastic in portions surrounding the four conductors 41.

In the above embodiment, the upper portion of the cross-shaped keytop body 31 is exposed entirely. However, the present invention is not limited to this embodiment. For example, the intersection of the cross shape of the keytop body 31 may or may not be exposed. More specifically, the finger-pressing portions 31A of the keytop body 31 are exposed, whereas the intersection (center) of the cross shape of the keytop body 31 may be covered with, for example, the top plate 7.

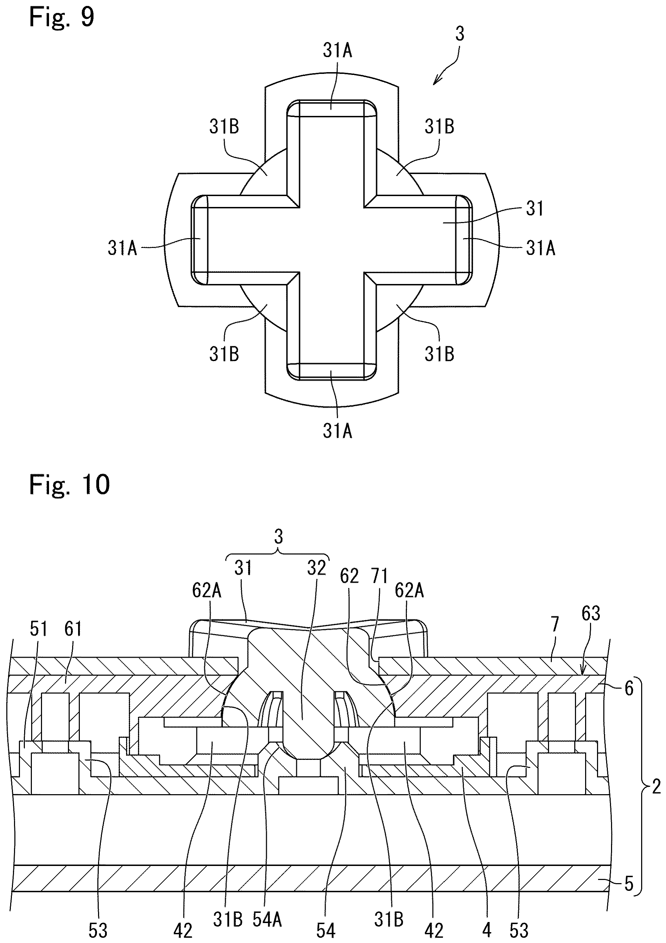

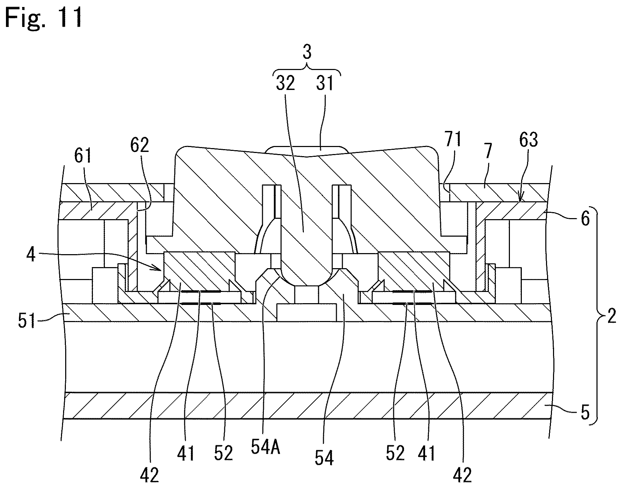

In the above embodiment, the keytop 3 includes the extension 33 at the end of the shaft 32, and the extension 33 includes the convex spherical surface 33B. However, the present invention is not limited to this embodiment. For example, the keytop 3 may be structured as in a third modification shown in Figs. 9 to 11. Fig. 9 is a plan view of a keytop in a controller according to the third modification. As shown in Fig. 9, convex spherical surfaces 31B may be located around the intersection of the cross shape of the keytop body 31. Fig. 10 is a partially enlarged cross-sectional view of the controller according to the third modification, taken along a diagonal line (taken along a line passing through two of the convex spherical surfaces 31B). Fig. 11 is a partially enlarged cross-sectional view of the controller according to the third modification, taken along a lateral line (taken along a line passing through two of the finger-pressing portions 31A). As shown in Fig. 10, the through-hole 62 in the upper wall 61 may have, on its inner surface, concave spherical surfaces 62A on which the convex spherical surfaces 31B of the keytop body 31 slide. In this structure, the concave spherical surfaces 62A function similarly to the restricting portion 64, positioning the pivot point of the keytop 3 at the center of the convex spherical surfaces 31B of the keytop body 31. This further improves the operability of the keytop 3.

### INDUSTRIAL APPLICABILITY

The controller and the key assembly according to one or more embodiments of the present invention improve the operability of the keytop, and thus are usable in, for example, gaming controllers.

### EXPLANATION OF REFERENCES

- 1: controller
- 2: housing
- 3: keytop
- 31: keytop body
- 31A: finger-pressing portion
- 32: shaft
- 33: extension
- 33A: through-hole
- 33B: convex spherical surface
- 33C: convex spherical surface
- 4: elastic member
- 41: conductor
- 42: pressure receiver
- 43: through-hole
- 5: lower housing
- 51: lower wall
- 52: contact
- 53: boss
- 54: support
- 54A: concave spherical surface
- 6: upper housing
- 61: upper wall
- 62: through-hole
- 62A: concave spherical surface
- 63: recess
- 64: restricting portion
- 64A: opening
- 64B: concave spherical surface
- 7: top plate
- 71: opening
- W1, W2: maximum width
- W3: minimum width

## Claims

1. A controller (1), comprising:
a first wall (51) including a plurality of contacts (52);
a second wall (61) facing the first wall (51);
a keytop (3) pivotally located in a space between the first wall (51) and the second wall (61) and at least partially protruding and exposed through the second wall (61); and
an elastic member (4) disposed between the keytop (3) and the first wall (51), the elastic member (4) including conductors (41) at positions facing the plurality of respective contacts (52), wherein
in response to pivoting of the keytop (3), the elastic member (4) is configured to be pressed by the keytop (3) to electrically connect one of the plurality of contacts (52) to a corresponding conductor (41) of the conductors (41), the keytop (3) includes
a shaft (32) extending toward the first wall (51); and
an extension (33) at an end of the shaft (32), the extension (33) having a maximum width (W2) greater than a maximum width (W1) of the shaft (32) when viewed in a thickness direction of the first wall (51),
the first wall (51) or the second wall (61) includes a restricting portion (64) having an opening (64A) with a minimum width (W3) greater than the maximum width (W1) of the shaft (32) and less than the maximum width (W2) of the extension (33), the restricting portion (64) receiving the shaft (32) in the opening (64A) and positioning the extension (33) between the opening (64A) and the first wall (51) to regulate pivoting of the keytop (3).

2. The controller (1) according to claim 1, wherein
the extension (33) has a convex spherical surface (33B),
the restricting portion (64) has a concave spherical surface (64B) on which the convex spherical surface (33B) of the extension (33) slides in response to pivoting of the keytop (3).

3. The controller (1) according to claim 1 or 2, wherein
the first wall (51) includes a support (54) protruding toward the extension (33) and supporting the extension (33).

4. The controller (1) according to claim 3, wherein
the extension (33) has a convex spherical surface (33C),
the support (54) has a concave spherical surface (54A) on which the convex spherical surface (33C) of the extension (33) slides in response to pivoting of the keytop (3).

5. The controller (1) according to any one of claims 1-4, wherein
the shaft (32) and the extension (33) are formed from different materials.

6. The controller (1) according to any one of claims 1-5, wherein
the extension (33) is spherical.

7. A key assembly, comprising:
a base (51) including a plurality of contacts (52);
a keytop (3) pivotally located above the base (51); and
an elastic member (4) disposed between the keytop (3) and the base (51), the elastic member (4) including conductors (41) at positions facing the plurality of respective contacts (52), wherein,
in response to pivoting of the keytop (3), the elastic member (4) is configured to be pressed by the keytop (3) to electrically connect one of the plurality of contacts (52) to a corresponding conductor (41) of the conductors (41),
the keytop (3) includes
a shaft (32) extending toward the base (51); and
an extension (33) at an end of the shaft (32),
the extension (33) has a maximum width (W2) greater than a maximum width (W1) of the shaft (32) when viewed in a thickness direction of the base (51),
the key assembly includes a restricting portion (64) above the base (51),
the restricting portion (64) has an opening (64A) having a minimum width (W3) greater than the maximum width (W1) of the shaft (32) and less than the maximum width (W2) of the extension (33), the restricting portion (64) receiving the shaft (32) in the opening (64A) and positioning the extension (33) between the opening (64A) and the base (51) to regulate pivoting of the keytop (3).
